# EUROPEAN PATENT SPECIFICATION

(11) **EP 2 133 224 B1**
(45) Date of publication and mention of the grant of the patent: **01.12.2010**
(21) Application number: 09007567.2
(22) Date of filing: 08.06.2009
(51) Int. Cl.: B60H 1/00

(54) **Operating device for air conditioner**
Betätigungsvorrichtung für eine Klimaanlage
Dispositif de commande pour climatiseur

(30) Priority: 13.06.2008 JP 2008155510
(43) Date of publication of application: 16.12.2009
(73) Proprietor: ALPS ELECTRIC CO., LTD., Tokyo 145-8501 (JP)
(72) Inventor: Yamane, Ayami c/o Alps Electric Co., Ltd., Ota-ku Tokyo 145-8501 (JP); Shirasaka, Takeshi c/o Alps Electric Co., Ltd., Ota-ku Tokyo 145-8501 (JP); Tamegai, Taiga c/o Alps Electric Co., Ltd., Ota-ku Tokyo 145-8501 (JP)
(74) Representative: Klunker . Schmitt-Nilson . Hirsch

(56) References cited:
- DE-B3-102005 014 198
- FR-A- 2 448 186
- FR-A- 2 461 148
- US-A1- 2004 142 653

## Description

### BACKGROUND

### 1. Technical Field

The present disclosure relates to an operating device for an air conditioning unit such as a car air conditioner, suitable for temperature regulation or air volume control.

### 2. Related Art

Such an operating device is known from US 2004/0142653, which is considered as the closest prior art.

In general, this type of operating device for an air conditioner has a configuration in which an operating member for temperature regulation and an operating member for air volume control are separated from each other such that each operating member is individually operated.

Accordingly, when temperature regulation and air volume control are performed sequentially, sequential operation of the two operating members, which are independent of one another, was difficult and operability was bad.

Therefore, in the past, there is a disclosure of an operating device for an air conditioning unit which has a configuration in which an operating member for air volume control having plural regions that are selectively pushed down is arranged inside an operating member for temperature regulation which has a cylindrical shape to be rotatably operated, so as to enable the operating members to be individually operated (for example, refer to JP-A-2001-163033). Accordingly, the operating member for temperature regulation and the operating member for air volume control can be arranged to be compact, so that a sequential operation can be performed relatively easily. In addition, in this typical operating device for an air conditioner, a display panel for displaying a set temperature and a set air volume is provided at a predetermined position distant from the two operating members.

### SUMMARY

In the technique disclosed in JP-A-2001-163033, the operating member for temperature regulation and the operating member for air volume control are separated and while one is rotated to be operated the selected region of the other is pushed down to be operated. Therefore, a finger movement of an operator is not that simple when the temperature regulation and the air volume control are sequentially performed. Specifically, in order to push down and operate a predetermined region of the operating member provided on the inside right after rotating and operating the operating member provided on the outside, or on the contrary, in order to rotate and operate the operating member provided on the outside right after pushing down and operating the predetermined region of the operating member provided on the inside, generally, after operating the one operating member and removing a finger therefrom, the other operating member is operated. Therefore, there is a problem in that it is difficult to properly perform the sequential operation of the two operating members.

In addition, in this technique, although the operating member for temperature regulation and the operating member for air volume control are arranged to be compact, during operations for temperature regulation and air volume control, the set temperature or the set air volume are checked through the display panel disposed at the position distant from the two operating members. Accordingly, when the user is unaccustomed to the operations, the user cannot easily perceive the operation state.

It is desirable to provide an operating device for an air conditioner which properly performs sequential operation of temperature regulation and air volume control which easily perceives an operation state.

According to an aspect of the invention, there is provided an operating device for an air conditioner, including: an operating member which is slidably operated to move in vertical and horizontal directions in an operation region; holding means for holding the operating member at an arbitrary position in the operation region; vertical position detecting means for detecting a vertical position of the operating member in the operation region; horizontal position detecting means for detecting a horizontal position of the operating member in the operation region; and control means for setting a first function on the basis of the detection result of the vertical position detecting means and setting a second function on the basis of the detection result of the horizontal position detecting means, wherein one of the first and second functions is a temperature regulation function, and the other thereof is an air volume control function.

In the operating device for an air conditioner having the abovementioned configuration, a temperature or a specific air volume can be selectively controlled depending on whether the single operating member is slidably operated in the vertical direction or the horizontal direction. This results in sequential operation of the temperature regulation and the air volume control being properly performed. In addition, a current position of the operating member in the operation region represents set values of the temperature and the air volume, so that an operation state can be immediately perceived, and an additional display panel is not needed.

In this configuration, a front plate provided with a square opening surrounding the operation region is further included, in the middle of the front plate, one of a belt-like region provided along a vertical side of the opening and a belt-like region provided along a horizontal side of the opening is provided with a temperature scale, and the other thereof is provided with an air volume scale. Therefore, a correlation between the current position of the operating member in the operation region, the temperature and the air volume is shown clearly, which is preferable.

In this configuration, graduations for representing a degree of temperature are marked on the temperature scale, and graduations for representing a degree of air volume are marked on the air volume scale. Therefore, the correlation between the current position of the operating member in the operation region, the temperature and the air volume can be shown more clearly. In this case, a movable plate which is larger than the opening and moves along with the operating member is further included, and the movable plate is provided with at least one of a vertical position extension mark exposed at a region horizontally extending from the operating member in the opening, and a horizontal position extension mark exposed at a region vertically extending from the operating member in the opening. Therefore, the current position of the operating member with respect to the graduations (for example, temperature graduations) marked along the vertical side of the opening can be accurately recognized through the vertical position extension mark, and the current position of the operating member with respect to the graduations (for example, air volume graduations) marked along the horizontal side of the opening can be accurately recognized through the horizontal position extension mark. In addition, an intrusion of foreign substances into the opening of the front plate can be prevented by the movable plate, and the movable plate can be applied as a decorative plate.

In this configuration, plural operating keys for selectively setting exhaust ports are arranged around the opening of the front plate. Therefore, a selection from the exhaust ports which does not include a concept of magnitude control, unlike the temperature regulation or air volume control, is performed by pushing down the operating keys, separately provided from the operating member. Accordingly, even when a decrease in size of the operating device is attempted by disposing the operating member and the operating keys to close to each other, operations of different functions can be easily distinguished from each other, so that misoperation is hardly performed.

In this configuration, the vertical position detecting means includes a first slider which is slidably engaged with the operating member to reciprocate in a vertical direction, the horizontal position detecting means includes a second slider which is slidably engaged with the operating member to reciprocate in a horizontal direction, and the first and second sliders are driven by the operating member to reciprocate. Therefore, the current position of each slider can be individually measured by detectors such as variable resistors, so that the vertical and horizontal positions of the operating member can be detected. Accordingly, a mechanism of the vertical position detecting means and the horizontal position detecting means can be simplified and, thus, high reliability can be guaranteed. In this case, by slidably operating the operating member in an oblique direction, a vertical movement of the first slider and a horizontal movement of the second slider simultaneously occur, so that it is possible to simultaneously control the temperature and the air volume.

In this configuration, the operating member includes an operation knob having a square shape or a plus-sign shape in a plan view. Therefore, there is little possibility that a rotational operation force is exerted by mistake on the operating member. Here, an operation knob having such a shape that it can be held by a hand to easily slide may be used.

In the operating device for an air conditioner according to the aspect of the invention, the temperature or the air volume can be selectively controlled depending on whether the single operating member is slidably operated in the vertical direction or the horizontal direction, so that the sequential operation of the temperature regulation and the air volume control can be properly performed. In addition, the current position of the operating member in the operation region represents set values of the temperature and the air volume, so that an operation state can be immediately perceived, and an additional display panel is not needed. Accordingly, the operating device for an air conditioner having high operability can be provided at low cost.

### BRIEF DESCRIPTION OF THE DRAWINGS

Fig. 1 is a front view of an operating device for an air conditioner according to a first embodiment of the invention.
Fig. 2 is a sectional view taken along the line A-A of Fig. 1.
Fig. 3 is an explanatory view of an internal structure of the operating device according to the first embodiment.
Fig. 4 is a block diagram illustrating a signal flow output from the operating device according to the first embodiment.
Fig. 5 is a front view of an operating device for an air conditioner according to a second embodiment of the invention.
Fig. 6 is a front view of an operating device for an air conditioner according to a third embodiment of the invention.

### DESCRIPTION OF EXEMPLARY EMBODIMENTS

### Exemplary embodiments of the invention will be

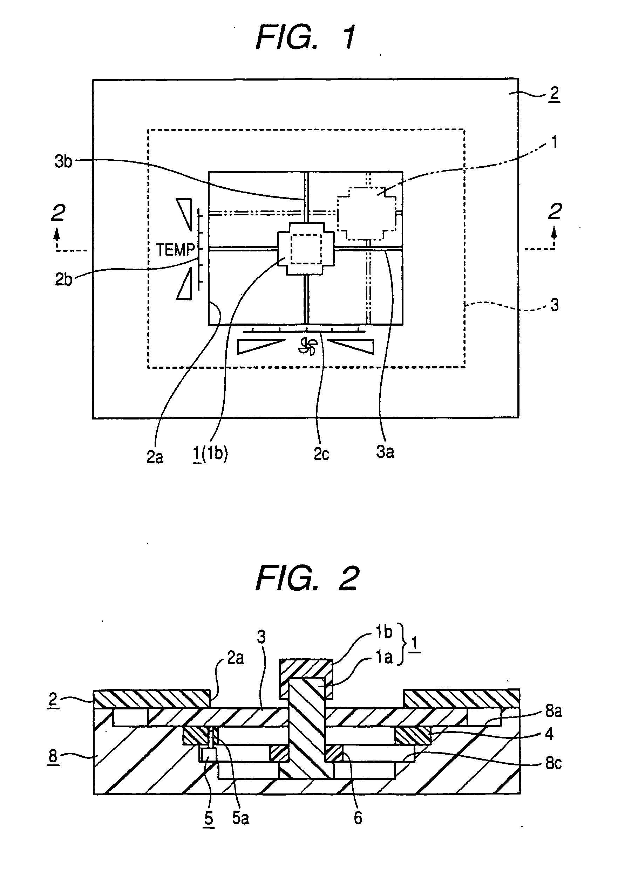

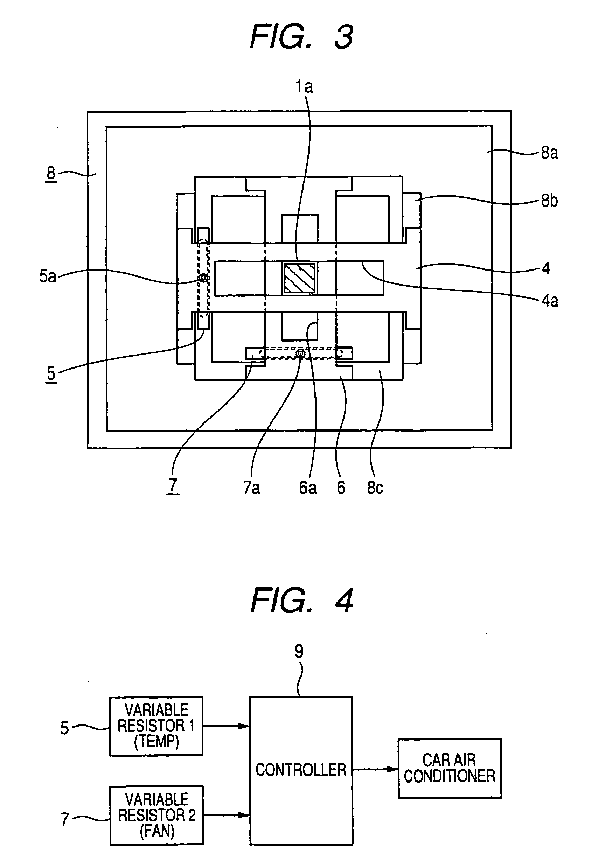

described with reference to the accompanying drawings. Fig. 1 is a front view of an operating device for an air conditioner according to a first embodiment of the invention. Fig. 2 is a sectional view taken along the line A-A of Fig. 1. Fig. 3 is an explanatory view of an internal structure of the operating device. Fig. 4 is a block diagram illustrating a signal flow output from the operating device.

The operating device illustrated in Figs. 1 to 3 is used for controlling a temperature and an air volume of a car air conditioner. This operating device mainly includes an operating member 1 constructed by mounting an operation knob 1b on an operation axis 1a, a front plate 2 having a rectangular opening 2a surrounding an operation region of the operating member 1, a movable plate 3 formed integrally with the operating member 1, a first slider 4 slidably engaged with the operating member 1 to reciprocate in the vertical direction, a first variable resistor 5 for detecting a current position (vertical position) of the first slider 4, a second slider 6 slidably engaged with the operating member 1 to reciprocate in the horizontal direction, a second variable resistor 7 for detecting a current position (horizontal direction) of the second slider 6, a casing 8 for slidably supporting the operating member 1, the movable plate 3, the first and second sliders 4 and 6, and the like, and a controller 9 (see Fig. 4) for generating a control signal of the car air conditioner on the basis of detection signals output from the first and second variable resistors 5 and 7.

The operating member 1 is slidably mounted on a bottom surface in the casing 8, and the operation axis 1a penetrating the opening 2a is crowned with the operation knob 1b having a plus-sign shape (+ shape) in a plan view. The operation region of the operating member 1 is defined by the opening 2a, and when the operating member 1 is slidably operated in a desired direction in the operation region, the operating member 1 is moved in the direction. Specifically, an operator can grip the operation knob 1b with a finger to slide and move the operating member 1 upward, downward, to the left, or to the right in Fig. 1. In addition, the operating member 1 can be slidably moved obliquely upward to the right, obliquely downward to the right, obliquely upward to the left of FIG. 1, obliquely downward to the left, or the like. In addition, since the operation knob 1b has the plus-sign shape in the plan view, there is little possibility that the operator exerts a rotational operation force on the operating member 1 by mistake.

The movable plate 3 has a rectangular shape larger than the opening 2a, and is slidably mounted on a top surface 8a of the casing 8. Since the movable plate 3 is externally fitted to the operation axis 1a, the operating member 1 and the movable plate 3 slidably move in one body. Here, although the operating member 1 moves anywhere in the operation region, since at least an outer periphery portion of the movable plate 3 is covered by the front plate 2, the opening 2a is maintained to be always closed by the movable plate 3. As illustrated in Fig. 1, a vertical position extension mark 3a and a horizontal position extension mark 3b as two perpendicular lines are provided on a surface of the movable plate 3. The vertical position extension mark 3a is configured as a line exposed at a region horizontally extending from the operating member 1 in the opening 2a, and the horizontal position extension mark 3b is configured as a line exposed at a region vertically extending from the operating member 1 in the opening 2a.

The front plate 2 is fixed on the casing 8. As illustrated in Fig. 1, the front plate 2 is provided with a temperature scale 2b at a belt-like region along a left vertical side of the opening 2a, and an air volume scale 2c at a belt-like region along a lower horizontal side of the opening 2a. Graduations for representing a degree (height) of temperature are marked on the temperature scale 2b. The temperature graduations are provided with an indication for indicating that the degree increases (the temperature increases) as it goes from the bottom to the top of Fig. 1. In addition, graduations for representing a degree (strength) of air volume are marked on the air volume scale 2c. The air volume graduations are provided with an indication for indicating that the degree increases (the air volume increases) as it goes from the left to the right of Fig. 1. In addition, an intrusion of foreign substances into the opening 2a of the front plate 2 can be prevented by the movable plate 3, and the movable plate 3 can be applied as a decorative plate.

The first slider 4 is slidably mounted on an upper terrace surface 8b of the casing 8, and guided by a side wall of the upper terrace surface 8b to reciprocate vertically. As illustrated in Fig. 3, the first slider 4 is provided with a long hole 4a extending along a horizontal side of the opening 2a, and the operation axis 1a penetrates the long hole 4a to slide. Accordingly, when the operating member 1 vertically moves a predetermined distance in the operation region, the first slider 4 is driven by the operation axis 1a to move the same distance in the same direction. However, when the operating member 1 horizontally moves along the long hole 4a, the first slider 4 does not move.

As illustrated in Figs. 2 and 3, a left end of the first slider 4 is held by a driven member 5a of the first variable resistor 5, and slide resistance of the driven member 5a is exerted as binding force, so that the first slider 4 cannot move freely. In addition, when the first slider 4 is driven by the operating member 1 to move vertically, the driven member 5a is driven by the first slider 4 to move the same distance in the same direction. In addition, a wiper which is formed integrally with the driven member 5a and not shown changes a contact position with respect to a resistor not shown, and an output value of the first variable resistor 5 is changed. Accordingly, a current position (vertical position) of the first slider 4 that is vertically movable can be detected by the output value of the first variable resistor 5. The first slider 4 and the first variable resistor 5 constitute vertical position detecting means for detecting the position of the operating member 1 with respect to the temperature scale 2b.

The second slider 6 is slidably mounted on a lower terrace surface 8c of the casing 8, and guided by a side wall of the lower terrace surface 8c to reciprocate horizontally. As illustrated in Fig. 3, the second slider 6 is provided with a long hole 6a extending along a vertical side of the opening 2a, and the operation axis 1a penetrates the long hole 6a to slide. Accordingly, when the operating member 1 is horizontally moved a predetermined distance in the operation region, the second slider 6 is driven by the operation axis 1a to move the same distance in the same direction. However, when the operating member 1 is moved vertically along the long hole 6a, the second slider 6 does not move.

As illustrated in Fig. 3, a lower end of the second slider 6 is held by a driven member 7a of the second variable resistor 7, and slide resistance of the driven member 7a is exerted as binding force, so that the second slider 6 cannot move freely. In addition, when the second slider 6 is driven by the operating member 1 to move horizontally, the driven member 7a is driven by the second slider 6 to move the same distance in the same direction. In addition, a wiper which is formed integrally with the driven member 7a and not shown, changes a contact position with respect to a resistor not shown, and an output value of the second variable resistor 7 is changed. Accordingly, a current position (horizontal position) of the second slider 6 that is horizontally movable can be detected by the output value of the second variable resistor 7. The second slider 6 and the second variable resistor 7 constitute horizontal position detecting means for detecting the position of the operating member 1 with respect to the air volume scale 2c.

As illustrated in Fig. 4, detection signals are supplied from the first and second variable resistors 5 and 7 to the controller 9, and a control signal based on the detection signals is output from the controller 9 to the car air conditioner. Specifically, the controller 9 performs setting of a temperature regulation function on the basis of the detection result of the first variable resistor 5 and performs setting of an air volume control function on the basis of the detection result of the second variable resistor 7.

In the operating device having the above-mentioned configuration, the first and second sliders 4 and 6 held by the driven members 5a and 7a are set so as not to move freely. Therefore, when the operating device 1 is not operated, the operating member 1 is stably held at an arbitrary position in the operation region while being interposed between the both sliders 4 and 6. In addition, when the operating member 1 is slidably operated in the vertical direction, the vertical position of the operating member 1 is detected by the first slider 4 and the first variable resistor 5, and the set temperature of the car air conditioner is changed. In addition, when the operating member 1 is slidably operated in the horizontal direction, the horizontal position of the operating member 1 is detected by the second slider 6 and the second variable resistor 7, and the set air volume of the car air conditioner is changed. In addition, when the operating member 1 is slidably operated in an oblique direction, the first and second sliders 4 and 6 are driven in both vertical and horizontal directions, so that both of the set temperature and the set air volume of the car air conditioner are changed.

For example, when the operator moves the operating member 1 vertically upward, the set temperature increases, and on the contrary, when the operator moves the operating member 1 vertically downward, the set temperature decreases. Here, the change in the position of the operating member 1 with respect to the temperature scale 2b can be accurately recognized through the vertical position extension mark 3a.

In addition, when the operator moves the operating member 1 horizontally to the right, the set air volume increases, and on the contrary, when the operator moves the operating member 1 horizontally to the left, the set air volume decreases. Here, the change in the position of the operating member 1 with respect to the air volume scale 2c can be accurately recognized through the horizontal position extension mark 3b.

In addition, when the operator moves the operating member 1 obliquely upward to the right, the set temperature increases and the set air volume increases, and when the operator moves the operating member 1 obliquely downward to the right, the set temperature decreases and the set air volume increases. In addition, when the operator moves the opening member 1 obliquely upward to the left, the set temperature increases and the set air volume decreases, and when the operator moves the opening member 1 obliquely downward to the left, the set temperature decreases and the set air volume decreases.

As described above, in the operating device according to this embodiment, the temperature and the air volume of the car air conditioner can be selectively controlled depending on whether the single operating member 1 is slidably operated in the vertical direction or the horizontal direction. Accordingly, a sequential operation of the temperature regulation and the air volume control can be properly performed and good operability can be expected. Moreover, in this operating device, the current position of the operating member 1, in the opening 2a (in the operation region), indicates the set temperature and the set air volume so that the operation state can be immediately perceived and an additional display panel is not needed. Therefore, while driving a car, the operator can easily perform the temperature regulation or the air volume control and a reduction in cost of the product can be easily achieved.

In addition, in the operating device according to this embodiment, the current position of the sliders 4 and 6 which are driven by the operating member 1 to move vertically and horizontally, respectively, can be measured by the variable resistors 5 and 7, so that the vertical and horizontal positions of the operating member 1 can be detected. Accordingly, a mechanism for detecting coordinates of the operating member 1 is simple and has high reliability. In addition, by slidably operating the operating member 1 in an oblique direction, a vertical movement of the first slider 4 and a horizontal movement of the second slider 6 can be simultaneously enabled.

Accordingly, it is possible to simultaneously control the temperature and the air volume, and in this aspect, good operability can be expected. For example, when the operating member 1 is disposed at a full line position of Fig. 1, and the operator wants a large amount of warm air blown inside of the car, the operator may move the operating member 1 obliquely upward to the right to a position represented by chain lines of Fig. 1.

In addition, in the operating device according to this embodiment, the belt-like regions of the front plate 2 provided along the vertical and horizontal sides of the opening 2a are provided with the temperature scale 2b having the temperature graduations and the air volume scale 2c having the air volume graduations, respectively. In addition, simultaneously, a change in the position of the operating member 1 with respect to the scales 2b and 2c can be accurately recognized through the vertical position extension mark 3a and the horizontal position extension mark 3b. Therefore, in the operation region, a correlation between the current position of the operating member 1, the temperature, and the air volume can be seen clearly, and in this aspect, good operability can be expected.

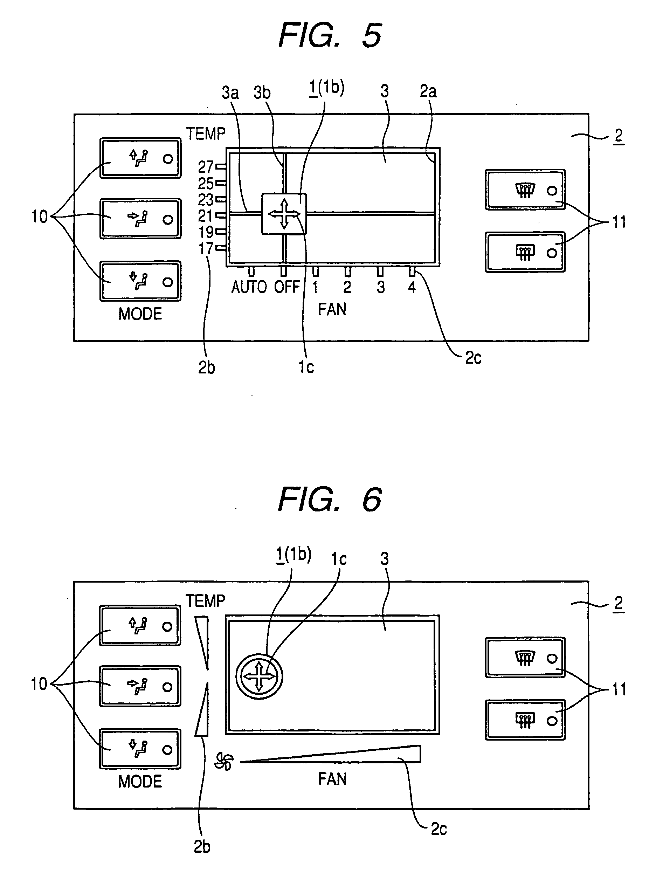

Fig. 5 is a front view of an operating device for an air conditioner according to a second embodiment of the invention. Since like elements corresponding to Fig. 1 are denoted by like elements, a detailed description thereof is omitted.

The operating device according to the second embodiment is different from that according to the first embodiment described above in that three operating keys 10 for selectively setting exhaust ports and two operating keys 11 for defrosting are arranged around the opening 2a of the front plate 2. The operating keys 10 and 11 are used for setting a function which does not include a concept of magnitude control, unlike the temperature regulation or the air volume control. Accordingly, even though the operating keys 10 and 11 which are pushed down to operate are arranged near the operating member 1 which is slidably operated to achieve an increase in the number of functions and a reduction in size of the operating device, operations of different functions can be easily distinguished from each other, so that misoperation is hardly performed.

In addition, in the second embodiment, the operation knob 1b of the operating member 1 is square in a plan view, and on a surface of this operation knob 1b, a movement direction indicating mark 1c is marked along extension lines of the vertical position extension mark 3a and the horizontal position extension mark 3b.

Fig. 6 is a front view of an operating device for an air conditioner according to a third embodiment of the invention. Since like elements corresponding to Fig. 5 are denoted by like reference numerals, a detailed description thereof is omitted.

The third embodiment is a modified example of the second embodiment. The third embodiment is different from the second embodiment in that graduations are not marked on the temperature scale 2b and the air volume scale 2c, the vertical position extension mark and the horizontal position extension mark are omitted, and the operation knob 1b is circular in a plan view. Specifically, in the third embodiment, a degree of temperature of the temperature scale 2b and a degree of air volume of the air volume scale 2c are qualitatively displayed by designed figures. In addition, in the third embodiment, the movement direction indicating mark 1c is marked on the surface of the operation knob 1b, so that there is little possibility that the a rotational operation force is exerted by mistake on the operation knob 1b that is circular in the plan view. In addition, in the third embodiment, although the vertical position extension mark and the horizontal position extension mark are omitted, a setting state of the temperature and the air volume can be perceived by the position of the operation knob 1b.

In addition, in this embodiment, the holding means is configured as the driven members 5a and 7a to hold the operating member 1 at an arbitrary position in the operation region by the slide resistance of the driven members 5a and 7a. As a configuration for exerting the slide resistance to the driven member 5a, in addition to the configuration in which pressure is applied by the wiper which is formed integrally with the driven member 5a and not shown, a configuration in which a spring member for increasing the slide resistance is provided to the driven member 5a to slide with respect to a fixed portion of the variable resistor 5 may be employed. Additionally, a configuration in which a coil spring, and a steel ball elastically pressed to the fixed portion of the variable resistor 5 by the coil spring are held in the driven member 5a may be employed. Furthermore, a configuration in which grease having high viscosity is provided between the driven member 5a and the fixed portion of the variable resistor 5 may be employed. Since those configurations for enhancing operating force of an operation unit of an electric component such as the variable resistor 5 are well known, a detailed description thereof is omitted. In addition, those can also be employed by the driven member 7a, so that a detailed description thereof is omitted.

In addition, in this embodiment, the driven members 5a and 7a of the variable resistors 5 and 7 that are the position detecting means, respectively, are configured as the holding means. However, other holding means may also be employed. Specifically, a configuration in which a spring member, or a coil spring and a steel boll described above are provided to one of the slider 4 and the casing 8 of one of the sliders 4 and 6, which does not hold the variable resistor 5 and 7, may be employed. In addition, a configuration in which grease is provided between the slider 4 and the casing 8 may be employed.

In addition, in this embodiment, the operating member 1 is indirectly held by the driven members 5a and 7a. However, elastic force may be directly applied to hold the operating member 1. Specifically, as described above, a configuration in which a spring member elastically contacts the casing 8 is provided to the operating member 1, or a configuration in which a coil spring and a steel ball which is elastically pressed to the casing 8 by the coil spring are held in the operating member 1, may be employed.

In addition, in this embodiment, the holding means applies a predetermined operating force to the operating member 1. Accordingly, as long as a predetermined or higher force is not exerted on the operating member 1, the operating member 1 does not move, but is held at an arbitrary position in this sense. However, the embodiment is not limited thereto, and a click mechanism may be provided at many operation positions in the operation range to hold the operating member 1 at a position at which the operating force of the operating member 1 is small.

In addition, in this embodiment, the position detecting means are configured as the variable resistors 5 and 7 having the resistors and the wipers. However, a magnetic variable resistor having a magnet and a magnetoresistive element, or an encoder may be employed.

It should be understood by those skilled in the art that various modifications, combinations, sub-combinations and alterations may occur depending on design requirements and other factors insofar as they are within the scope of the appended claims.

## Claims

1. An operating device for an air conditioner, comprising:
an operating member (1) which is slidably operated to move in vertical and horizontal directions in an operation region;
holding means (46) for holding the operating member at an arbitrary position in the operation region;
vertical position detecting means (5) for detecting a vertical position of the operating member in the operation region;
horizontal position detecting means (7) for detecting a horizontal position of the operating member in the operation region; and
control means (9) for setting a first function on the basis of the detection result of the vertical position detecting means (5) and setting a second function on the basis of the detection result of the horizontal position detecting means (7),
wherein one of the first and second functions is a temperature regulation function, and the other thereof is an air volume control function.

2. The operating device according to claim 1, further comprising a front plate (2) provided with a square opening (2a) surrounding the operation region,
wherein, in the middle of the front plate (2), one of a belt-like region provided along a vertical side of the opening and a belt-like region provided along a horizontal side of the opening is provided with a temperature scale (2b), and the other thereof is provided with an air volume scale (2c).

3. The operating device according to claim 2, wherein graduations for representing a degree of temperature are marked on the temperature scale (2b), and graduations for representing a degree of air volume are marked on the air volume scale (2c).

4. The operating device according to claim 2 or 3, further comprising a movable plater (3) which is larger than the opening (2a) and moves along with the operating member (1),
wherein the movable plate (3) is provided with at least one of a vertical position extension mark (3a) exposed at a region horizontally extending from the operating member (1) in the opening (2a), and a horizontal position extension mark (3b) exposed at a region vertically extending from the operating member (1) in the opening (2a).

5. The operating device according to any of claims 2 to 4,
wherein plural operating keys (10, 11) for selectively setting exhaust ports are arranged around the opening of the front plate.

6. The operating device according to any of claims 1 to 5,
wherein the vertical position detecting means (5) includes a first slider (4) which is slidably engaged with the operating member (1) to reciprocate in a vertical direction,
the horizontal position detecting means (7) includes a second slider (6) which is slidably engaged with the operating member (1) to reciprocate in a horizontal direction, and
the first and second sliders (4, 6) are driven by the operating member (1) to reciprocate.

7. The operating device according to any of claims 1 to 6, wherein the operating member (1) includes an operation knob having a square shape or a plus-sign shape in a plan view.

## Patentansprüche

1. Betätigungsvorrichtung für eine Klimaanlage, aufweisend:
ein Betätigungselement (1), das verschiebbar betätigt wird, um sich in einem Betätigungsbereich in vertikaler und horizontaler Richtung zu bewegen;
eine Halteeinrichtung (4, 6) zum Halten des Betätigungselements in einer beliebigen Position in dem Betätigungsbereich;
eine Vertikalpositions-Detektionseinrichtung (5) zum Detektieren einer vertikalen Position des Betätigungselements in dem Betätigungsbereich;
eine Horizontalpositions-Detektionseinrichtung (7) zum Detektieren einer horizontalen Position des Betätigungselements in dem Betätigungsbereich; und
eine Steuereinrichtung (9) zum Vorgeben einer ersten Funktion auf der Basis des Detektionsresultats der Detektionseinrichtung (5) für die vertikale Position und zum Vorgeben einer zweiten Funktion auf der Basis des Detektionsresultats der Detektionseinrichtung (7) für die horizontale Position,
wobei es sich bei der einen von der ersten und der zweiten Funktion um einem Temperaturregelfunktion und bei der anderen um eine Luftvolumensteuerfunktion handelt.

2. Betätigungsvorrichtung nach Anspruch 1,
weiterhin aufweisend eine Frontplatte (2), die mit einer quadratischen Öffnung (2a) versehen ist und den Betätigungsbereich umgibt,
wobei in der Mitte der Frontplatte (2) der eine von einem bandartigen Bereich, der entlang einer vertikalen Seite der Öffnung vorgesehen ist, und einem bandartigen Bereich, der entlang einer horizontalen Seite der Öffnung vorgesehen ist, mit einer Temperaturskala (2b) versehen ist und der andere mit einer Luftvolumenskala (2c) versehen ist.

3. Betätigungsvorrichtung nach Anspruch 2,
wobei Einteilungen zum Darstellen eines Temperaturgrades auf der Temperaturskala (2b) markiert sind und Einteilungen zum Darstellen eines Luftvolumenausmaßes auf der Luftvolumenskala (2c) markiert sind.

4. Betätigungsvorrichtung nach Anspruch 2 oder 3,
weiterhin aufweisend eine bewegliche Platte (3), die größer ist als die Öffnung (2a) und sich zusammen mit dem Betätigungselement (1) bewegt, wobei die bewegliche Platte (1) mit mindestens einer von einer Vertikalpositions-Erstreckungsmarkierung (3a), die in einem horizontal verlaufenden Bereich von dem Betätigungselement (1) in der Öffnung (2a) freiliegt, und einer Horizontalpositions-Erstreckungsmarkierung (3b) versehen ist, die in einem vertikal verlaufenden Bereich von dem Betätigungselement (1) in der Öffnung (2a) freiliegt.

5. Betätigungsvorrichtung nach einem der Ansprüche 2, bis 4,
wobei mehrere Betätigungstasten (10, 11) zum selektiven Vorgeben von Austrittsöffnungen um die Öffnung der Frontplatte herum angeordnet sind.

6. Betätigungsvorrichtung nach einem der Ansprüche 1 bis 5,
wobei die Detektionseinrichtung (5) für die vertikale Position einen ersten Schieber (4) aufweist, der mit dem Betätigungselement (1) zum Ausführen einer hin und her gehenden Bewegung in Vertikalrichtung verschiebbar in Eingriff steht,
wobei die Detektionseinrichtung (7) für die horizontale Position einen zweiten Schieber (6) aufweist, der mit dem Betätigungselement (1) zum Ausführen einer hin und her gehenden Bewegung in Horizontalrichtung verschiebbar in Eingriff steht, und
wobei der erste und der zweite Schieber (4, 6) von dem Betätigungselement (1) zum Ausführen einer hin und her gehenden Bewegung antriebsmäßig betätigbar sind.

7. Betätigungsvorrichtung nach einem der Ansprüche 1 bis 6,
wobei das Betätigungselement (1) einen Betätigungsknopf mit einer in der Draufsicht quadratischen Formgebung oder Pluszeichen-Formgebung aufweist.

## Revendications

1. Dispositif de commande pour climatiseur, comprenant :
un élément d'actionnement (1) qui est actionné de manière glissante pour se déplacer dans des directions verticale et horizontale dans une région d'actionnement ;
un moyen de maintien (46) pour maintenir l'élément d'actionnement en une position arbitraire dans la région d'actionnement ;
un moyen de détection de position verticale (5) pour détecter une position verticale de l'élément d'actionnement dans la région d' actionnement ;
un moyen de détection de position horizontale (7) pour détecter une position horizontale de l'élément d'actionnement dans la région d'actionnement ; et
un moyen de commande (9) pour régler une première fonction d'après le résultat de la détection du moyen de détection de position verticale (5) et pour régler une deuxième fonction d'après le résultat de la détection du moyen de détection de position horizontale (7),
dans lequel l'une des première et deuxième fonctions est une fonction de régulation de température, et l'autre est une fonction de commande de volume d'air.

2. Dispositif de commande selon la revendication 1, comprenant en outre une plaque avant (2) pourvue d'une ouverture carrée (2a) entourant la région d' actionnement,
dans lequel, au milieu de la plaque avant (2), une région parmi une région en bande prévue le long d'un côté vertical de l'ouverture et une région en bande prévue le long d'un côté horizontal de l'ouverture est pourvue d'une échelle de température (2b) et l'autre est pourvue d'une échelle de volume d'air (2c).

3. Dispositif de commande selon la revendication 2, dans lequel des graduations pour représenter un degré de température sont marquées sur l'échelle de température (2b), et des graduations pour représenter un degré de volume d'air sont marquées sur l'échelle de volume d'air (2c).

4. Dispositif de commande selon la revendication 2 ou 3, comprenant en outre une plaque mobile (3) qui est plus grande que l'ouverture (2a) et qui se déplace avec l'élément d'actionnement (1),
dans lequel la plaque mobile (3) est pourvue d'au moins un élément parmi un repère d'extension de position verticale (3a) exposé au niveau d'une région s'étendant horizontalement depuis l'élément d'actionnement (1) dans l'ouverture (2a), et un repère d'extension de position horizontale (3b) exposé au niveau d'une région s'étendant verticalement depuis l'élément d'actionnement (1) dans l'ouverture (2a).

5. Dispositif de commande selon l'une quelconque des revendications 2 à 4, dans lequel plusieurs touches d'actionnement (10, 11) pour régler sélectivement des orifices de sortie sont disposées autour de l'ouverture de la plaque avant.

6. Dispositif de commande selon l'une quelconque des revendications 1 à 5,
dans lequel le moyen de détection de position verticale (5) comprend un premier curseur (4) qui est en prise coulissante avec l'élément d'actionnement (1) pour aller et venir dans une direction verticale,
le moyen de détection de position horizontale (7) comprend un deuxième curseur (6) qui est en prise coulissante avec l'élément d'actionnement (1) pour aller et venir dans une direction horizontale, et
les premier et deuxième curseurs (4, 6) sont entraînés par l'élément d'actionnement (1) pour aller et venir.

7. Dispositif de commande selon l'une quelconque des revendications 1 à 6, dans lequel l'élément d'actionnement (1) comprend un bouton d'actionnement ayant une forme carrée ou une forme de signe plus dans une vue en plan.
